# EUROPEAN PATENT APPLICATION

(11) **EP 4 321 280 A1**
(43) Date of publication of application: **14.02.2024**
(21) Application number: 23184347.5
(22) Date of filing: 10.07.2023
(51) Int. Cl.: B22F 10/28, B22F 10/47, B22F 10/80, B33Y 10/00, B33Y 40/00, B33Y 40/20, B33Y 50/00

(54) **A METHOD OF MANUFACTURING A COMPONENT**

(30) Priority: 10.08.2022 GB 202211677
(71) Applicant: Rolls-Royce plc, London N1 9FX (GB)
(72) Inventor: Harding, Stephen, Derby, DE24 8BJ (GB)
(74) Representative: Rolls-Royce plc

(57) **Abstract**

There is disclosed a method of manufacturing a component, the method comprising: determining a predicted direction and extent of distortion of a portion of the component due to shrinkage of the component during additive manufacturing by melting and fusing powder; designing a support structure based on the predicted direction and extent of distortion of the portion of the component; additive manufacturing, by melting and fusing powder from a build plate, the component and the support structure; wherein the support structure comprises, in cross-section parallel to the build plate, a hook structure comprising an elongate arm and a hook protruding from the elongate arm; wherein the hook is deposited to abut a distortion surface of the component to restrain distortion of the portion of the component, the distortion surface being the surface which is furthest in the direction of distortion of the component; and wherein the elongate arm is deposited to extend from the hook in a direction having a vector component opposing the direction of distortion such that shrinkage of the elongate arm during additive manufacture provides a force to the portion of the component, via the hook, to minimise distortion of the portion of the component.

## Description

The present invention relates to a method of manufacturing a component.

During additive manufacture of components, particularly metal components, significant build stresses can arise which may distort the component. This is most prevalent on large aspect ratio (planar or curved) shapes. Conventionally, the part is constrained during the manufacture process using support structure to restrain any distortion until a stress relieving heat treatment cycle has been performed.

According to an aspect of the present disclosure, there is provided a method of manufacturing a component, the method comprising:
determining a predicted direction and extent of distortion of a portion of the component due to shrinkage of the component during additive manufacturing by melting and fusing powder;
designing a support structure based on the predicted direction and extent of distortion of the portion of the component;
additive manufacturing, by melting and fusing powder from a build plate, the component and the support structure;
wherein the support structure comprises, in cross-section parallel to the build plate, a hook structure comprising an elongate arm and a hook protruding from the elongate arm;
wherein the hook is deposited to abut a distortion surface of the component to restrain distortion of the portion of the component, the distortion surface being the surface of the component having the largest distortion in the predicted direction of distortion of the component; and
wherein the elongate arm is deposited to extend from the hook in a direction having a vector component opposing the direction of distortion such that shrinkage of the elongate arm during additive manufacture provides a force to the portion of the component, via the hook, to minimise distortion of the portion of the component.

The component may be a metal component, and the powder may be a metal powder. The component may have curvature in at least one direction.

It may be that the elongate arm extends from the hook parallel to, and opposing, the direction of distortion.

It may be that the hook comprises a protruding arrowhead, in cross-section parallel to the build plate, to abut the distortion surface. It may be that the protruding arrowhead comprises a surface abutting the distortion surface having a maximum width of 0.5mm, in cross-section. It may be that the hook comprises a plurality of protruding arrowheads.

Having a smaller contact area between the arrowhead and the distortion surface reduces the amount of machining required to remove the support structure from the component, and to finish the component.

It may be that the support structure comprises a plurality of hook structures. It may be that each hook structure corresponds to a different portion of the component to minimise distortion of the respective portion, and each hook structure may be separate from any other hook structure.

Having each hook structure separate from any other hook structure ensures that the hook structures do not accidentally find a new centre of volume to shrink towards.

It may be that the elongate arm comprises a minimum extent of 20mm from the hook in the direction parallel to and opposing the direction of distortion.

The elongate arm having an extent smaller than 20mm may have a negligible shrinkage during additive manufacture, and may therefore provide a negligible force to the portion of the component opposing a distorting force, such that it may not have a significant effect to reduce distortion of the component.

It may be that the support structure is deposited such that the length of the elongate arm in any cross-section parallel to the build plate is varied based on the perpendicular distance from the build plate.

It may be that a predictive simulation is used to determine a predicted direction and extent of distortion of the portion of the component.

It may be that an experimental component is additive manufactured, by melting and fusing powder, to determine a predicted direction and extent of distortion of the portion of the component by comparing the manufactured component against a design template.

It may be that the method further comprises iterating:
determining the predicted direction and extent of distortion of the portion of the component with the support structure; and
altering the design of the support structure based on the determined predicted direction and extend of distortion of the portion of the component with the support structure until the distortion of the portion falls below a distortion threshold.

It may be that determining the predicted direction and extent of distortion of the portion of the component with the support structure comprises additive manufacturing the component and the support structure, by melting and fusing powder, and comparing the manufactured component against a design template.

It may be that determining the predicted direction and extent of distortion of the portion of the component with the support structure comprises running a predictive simulation.

It may be that the method further comprises heat treating the manufactured component and support structure, followed by removal of the support structure from the component.

It may be that the portion of the component is an edge of the component, such that the distortion surface is the surface of the component having the largest distortion in the predicted direction of distortion at the edge of the component.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described, by way of example only, with reference to the accompanying Figures, in which:
**Figure 1** is a flow chart showing steps of a method of manufacturing a component;
**Figure 2** schematically shows a top view of a first example build plate building a component;
**Figure 3** schematically shows an oblique view of the first example build plate of Figure 1; and
**Figure 4** schematically shows a top view of a second example build plate building a component.

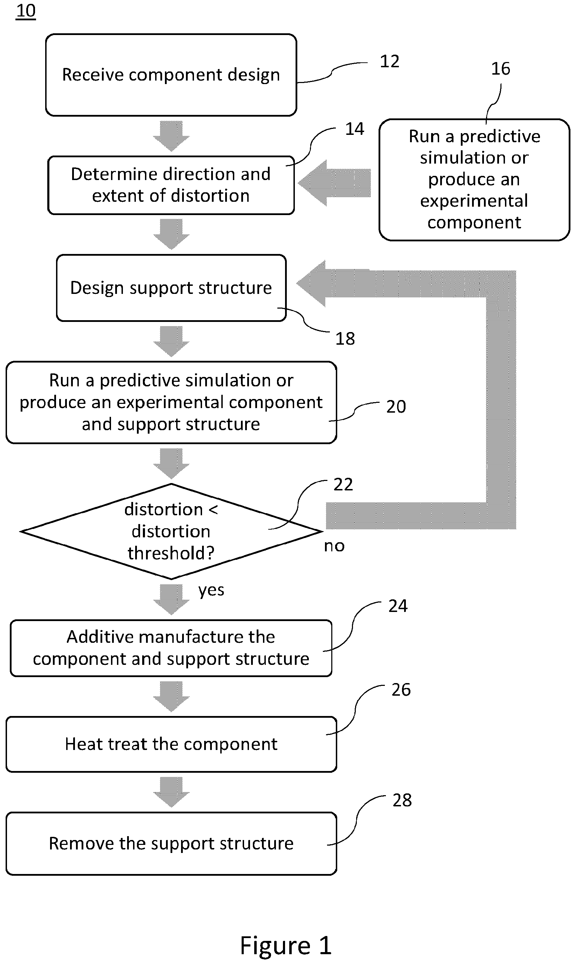

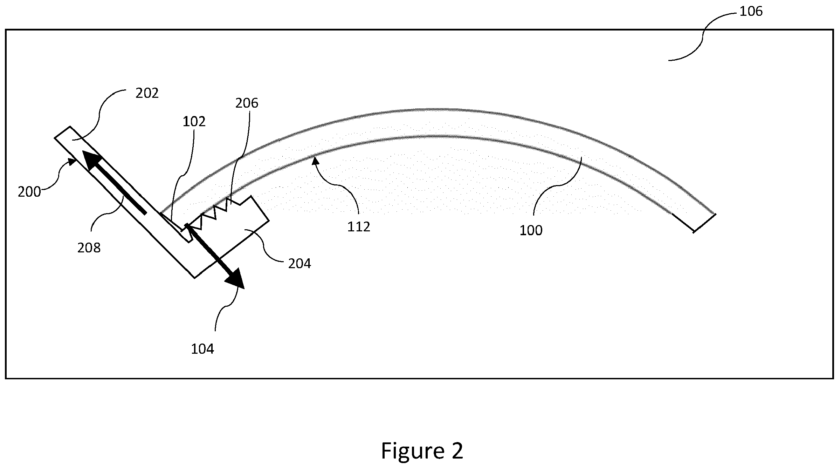

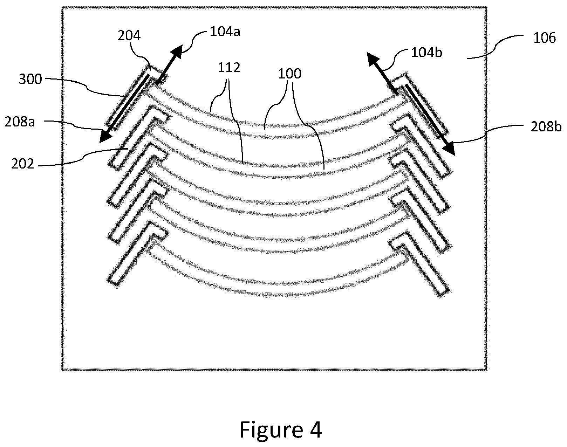

**Figure 1** is a flow chart showing steps of a method 10 of manufacturing a component 100. In some examples, the component 100 may be a metal component, or a non-metal component such as a plastic or ceramic component. **Figures 2-3** show a first example implementation of the method 10 on a build plate 106 and **Figure 4** shows a second example implementation of the method 10 on a build plate 106.

The method 10 begins in block 12 with receiving a component 100 design to be manufactured by additive manufacturing. In this example, the component 100 is a cylinder section, extending longitudinally (e.g., into the page in Figures 2 and 4) and along an arc. Therefore, in this example, the component 100 has a curvature in one direction, such that it has the same cross-section along a longitudinal direction. In other examples, the component may have curvature in more than one direction, or no curvature at all such that it is planar.

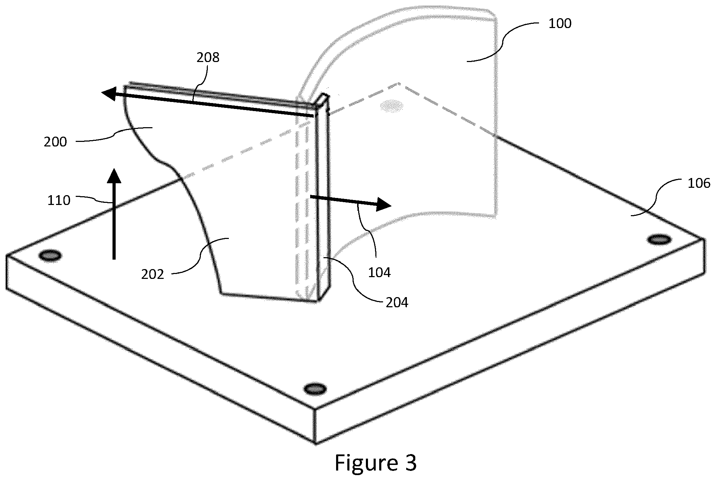

During additive manufacture of a component 100 by melting and fusing powder, for example by powder bed laser fusion, electron beam deposition, or blown powder deposition, a material such as metal is melted and fused together on a build plate 106 in layers, to form a component 100, as shown in Figures 2-4. Figures 2 and 3 show a single component 100 being manufactured, while Figure 4 shows multiple components 100 being manufactured. The layers of fused material are stacked in a build direction 110. During this process, significant build stresses can arise which may distort the component 100. The prevalence of distortion in an additive manufactured components is higher in components with curvature in at least one direction.

In block 14, the method 10 comprises determining a predicted direction and extent of distortion of a portion of the component 100 due to shrinkage of the component 100 during additive manufacturing by melting and fusing powder. In this example, the direction and extent of distortion of the edges 102 of the component are determined, as this is the portion of the component 100 having the largest distortion. The predicted direction and extent of distortion of the edge 102 of the component 100 (or any portion of the component 100) may be represented by a vector 104 as shown in Figures 2-4, in which a build plate 106 is shown with the component 100, or multiple components 100, being manufactured on the build plate 106.

In this example, in block 16, the direction and extent of distortion of a portion of the component 100 is determined with a predictive simulation, which models the additive manufacture of the component 100, or with an experimental additive manufacture of the component 100. In both examples, the distortion may be determined by comparing the simulated component or the experimentally manufactured component against the component design (i.e., a design template), and determining deviations from the design template.

In block 18, the method 10 comprises designing a support structure 200 and 300. The design of the support structure 200, 300 is based on the predicted direction and extent of distortion of the portion of the component 100, such as the edge 102. The support structure 200, 300 is configured to inhibit distortion of the component 100 during manufacture. The use of support structure 200, 300 to restrain the component 100 is complicated by the support structure 200, 300 shrinking and distorting itself. The invention aims to use this distortion advantageously to improve restraining distortion of the component 100.

The support structure 200 in Figures 2 and 3 comprises a hook structure including an elongate arm 202 and a hook 204 protruding from the elongate arm 202, in a cross-section parallel to the build plate 106. The support structure 300 in Figure 4 comprises a plurality of hook structures.

The hook 204 of each hook structure is designed to be deposited on the build plate 106 to abut a distortion surface 112 of the component 100 to restrain distortion of the component 100. The distortion surface 112 is the surface of the component 100 which is furthest in the direction of distortion of the component 100. Therefore, according to the distortion vectors 104 shown in Figures 2-4, the distortion surface 112 in this example is the inner surface of the cylinder section.

The hook 204 will restrain the portion of the component 100 which it is abutting most effectively. In this example, the edge 102 of the component is likely to experience the most distortion without any support, such that the hook 204 is designed to be deposited on the build plate 106 to abut the edge 102 of the component 100 on the distortion surface 112. In other examples, the hook may be designed to be deposited to abut any suitable portion of the component 100.

In this example, the hook 204 comprises a plurality of protruding arrowheads 206 in cross-section parallel to the build plate 106 (best seen in Figure 2) to abut the distortion surface 112 of the component 100. In other examples, there may be only a single protruding arrowhead from the hook, or there may be no protruding arrowheads from the hook.

In this example, the protruding arrowheads 206 comprise a surface which abuts the distortion surface having a maximum width of 0.5mm, in cross-section parallel to the build plate 106. In other examples, the maximum width may be any suitable width, which may be dictated by the size of a laser used to melt the powder. Having a smaller contact area between the hook 204 and the distortion surface 112 in the form of a protruding arrowhead 206 reduces or eliminates the amount of machining required to remove the support structure 200, 300 from the component 100 and finishing the component 100 after manufacturing. In particular, it enables a component to be manually removed from the support by snapping off or fatiguing the interface between them. This avoids a more costly machining operation. Having a plurality of protruding arrowheads 206 means that the hook 204 of the support structure 200, 300 can support a larger surface whilst minimising contact between the support structure 200, 300 and the distortion surface 112.

The elongate arm 202 of each hook structure is designed to be deposited to extend from the hook 204 in an elongate direction 208 having a vector component opposing the direction of distortion 104. In this example, the elongate direction 208 is designed to be parallel to the vector component opposing the direction of distortion 104. In other examples, the elongate direction may not be parallel to the vector component opposing the direction of distortion.

Having the elongate direction 208 having a vector component which opposes the direction of distortion at the point of contact with the component 100 means that shrinkage of the elongate arm 202 during additive manufacture provides a force to the hook 204, and therefore the portion of the component 100 which the hook 204 abuts, which opposes the direction of distortion, thereby minimising distortion of the portion of the component 100. It is further possible to enhance shrinkage of the elongate arm in a direction opposing the direction of distortion by manipulating printing parameters such as melt pool size, beam energy or beam speed.

In this example, the elongate arm 202 is designed to be deposited such that the length of the elongate arm 202, in a direction opposing the direction of distortion 104 in cross-section parallel to the build plate 106, is varied based on the perpendicular distance from the build plate 106 (i.e., the length of the elongate arm 202 is varied in the build direction 110) as shown in Figure 3. In other examples, the elongate arm may have the same cross-section at every layer from the build plate such that the length of the elongate arm does not vary in the build direction.

Distortion of the component 100 may be different at different heights from the build plate 106 in the build direction 110, since the layer of material deposited and fused on the build plate 106 is less likely to be distorted due to its attachment to the build plate 106, whereas the layers of material deposited and fused together further from the build plate 106 are more likely to be distorted, and by a larger extent. Therefore, varying the length of the elongate arm 202 of the support structure 200 according to the distance or from the build plate 106 in the build direction optimises a force profile applied to the component 100 during additive manufacturing to minimise the distortion of the component 100.

In this example, the elongate arm 202 comprises a minimum extent of 20mm from the hook 204 in the direction parallel to, and opposing, the direction of distortion 104. If the elongate direction 208 is not parallel to the direction of distortion, then the elongate arm 202 may have a component which is parallel to the direction of distortion 104 having a minimum extent of 20mm. In other examples, the elongate arm may have any suitable length. The elongate arm 202 having an extent smaller than 20mm in a direction parallel to, and opposing, the direction of distortion 104, may have a negligible shrinkage during additive manufacture, and may therefore provide a negligible force to the portion of the component 100 opposing a distorting force, such that it may not have a significant effect to reduce distortion of the component 100.

In some examples, as shown in **Figure 4****,** a second example support structure 300 may be designed. The second example support structure 300 comprises a plurality of hook structures, each hook structure corresponding to, and abutting, a different portion of the component 100, or a plurality of different components 100. Each hook structure is separate from any other hook structure, and therefore independently opposes distortion of any portion of the component 100 which the respective hook structure is abutting. Having each hook structure separate from any other hook structure ensures that the hook structures do not accidentally find a new centre of volume to shrink towards.

Referring back to Figure 1, in this example, after block 18, the method 10 proceeds to block 20, which is similar to block 16, but which runs a predictive simulation or manufactures an experimental component 100 together with the designed support structure 200, 300.

The method 10 comprises block 22, in which a predicted direction and extent of distortion of the component 100 with the support structure 200, 300 is determined based on the simulation or experimental manufacture of the component 100 and support structure 200, 300 in block 20 in a similar manner to block 14. In block 22, it is determined whether the predicted extent of distortion of the component 100 with the support structure 200, 300 is below a distortion threshold.

If the predicted extent of distortion is not below the distortion threshold (i.e., it is equal to or higher than the distortion threshold), the method 10 returns to block 18 to redesign the support structure 200, 300 based on the predicted direction and extent of distortion of the component 100. Therefore, the predicted distortion and design of the support structure 200, 300 is altered iteratively until the predicted extent of distortion of the component 100 falls below a threshold. In some examples, the method may proceed from block 18 directly to block 24, without iteratively modifying the support structure 200, 300 design. In other examples, there may be any other suitable criterion for determining whether to stop iterating the design of the support structure.

If the predicted extent of distortion is below the distortion threshold, the method 10 proceeds to block 24, in which the component 100 and the support structure 200, 300 are additive manufactured by melting and fusing powder from the build plate 106.

In block 26, the method 10 comprises heat treating the component 100 together with the support structure 200, 300. Heat treatment typically relieves the built-up stresses in the manufactured component 100 and the support structure 200, 300 so that the support structure 200, 300 is no longer required to prevent distortion of the component 100.

In block 28, the method 10 comprises removing the support structure 200, 300 from the component 100, after the heat treatment in block 26.

It will be appreciated that the steps on blocks 16 and 20 may be the same in a method (i.e., both blocks may include either a simulation of the component or an experimental manufacture of the component), or may be different (i.e., one block may include a simulation and the other block may include an experimental manufacture of the component). In some examples, the iteration may include different steps, such that one loop of the iteration between blocks 18-22 may comprise a simulation in block 20, while another iteration may comprise an experimental manufacture of the component in block 20.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (10) of manufacturing a component (100), the method (10) comprising:
determining a predicted direction and extent of distortion of a portion of the component (100) due to shrinkage of the component (100) during additive manufacturing by melting and fusing powder;
designing a support structure (200,300) based on the predicted direction and extent of distortion of the portion of the component (100);
additive manufacturing, by melting and fusing powder from a build plate (106), the component (100) and the support structure (200,300);
wherein the support structure (200,300) comprises, in cross-section parallel to the build plate (106), a hook structure comprising an elongate arm (202) and a hook (204) protruding from the elongate arm (202);
wherein the hook (204) is deposited to abut a distortion surface of the component (100) to restrain distortion of the portion of the component (100), the distortion surface being the surface of the component (100) having the largest distortion in the predicted direction of distortion of the component (100); and
wherein the elongate arm (202) is deposited to extend from the hook (204) in a direction having a vector component opposing the direction of distortion such that shrinkage of the elongate arm (202) during additive manufacture provides a force to the portion of the component (100), via the hook (204), to minimise distortion of the portion of the component (100).

2. The method (10) according to Claim 1, wherein the elongate arm (202) extends from the hook (204) parallel to, and opposing, the direction of distortion.

3. The method (10) according to Claim 1 or Claim 2, wherein the hook (204) comprises a protruding arrowhead, in cross-section parallel to the build plate (106), to abut the distortion surface.

4. The method (10) according to Claim 3, wherein the protruding arrowhead comprises a surface abutting the distortion surface having a maximum width of 0.5mm, in cross-section.

5. The method (10) according to Claim 3 or Claim 4, wherein the hook (204) comprises a plurality of protruding arrowheads.

6. The method (10) according to any one of the preceding claims, wherein the support structure (200,300) comprises a plurality of hook structures, each hook structure corresponding to a different portion of the component (100) to minimise distortion of the respective portion, and each hook structure separate from any other hook structure.

7. The method (10) according to any one of the preceding claims, wherein the elongate arm (202) comprises a minimum extent of 20mm from the hook (204) in the direction parallel to and opposing the direction of distortion.

8. The method (10) according to any one of the preceding claims, wherein the support structure (200,300) is deposited such that the length of the elongate arm (202) in any cross-section parallel to the build plate (106) is varied based on the perpendicular distance from the build plate (106).

9. The method (10) according to any one of the preceding claims, wherein a predictive simulation is used to determine a predicted direction and extent of distortion of the portion of the component (100).

10. The method (10) according to any one of the preceding claims, wherein an experimental component (100) is additive manufactured, by melting and fusing powder, to determine a predicted direction and extent of distortion of the portion of the component by comparing the manufactured component against a design template.

11. The method (10) according to any one of the preceding claims, wherein the method (10) further comprises iterating:
determining the predicted direction and extent of distortion of the portion of the component (100) with the support structure (200,300); and
altering the design of the support structure (200,300) based on the determined predicted direction and extend of distortion of the portion of the component (100) with the support structure (200,300) until the distortion of the portion falls below a distortion threshold.

12. The method (10) according to Claim 11, wherein determining the predicted direction and extent of distortion of the portion of the component (100) with the support structure (200,300) comprises additive manufacturing the component (100) and the support structure (200,300), by melting and fusing powder, and comparing the manufactured component (100) against a design template.

13. The method (10) according to Claim 11 or Claim 12, wherein determining the predicted direction and extent of distortion of the portion of the component (100) with the support structure (200,300) comprises running a predictive simulation.

14. The method (10) according to any one of the preceding claims, the method further comprising heat treating the manufactured component (100) and support structure (200,300), followed by removal of the support structure (200,300) from the component (100).

15. The method (10) according to any one of the preceding claims, wherein the portion of the component (100) is an edge of the component, such that the distortion surface is the surface of the component (100) having the largest distortion in the predicted direction of distortion at the edge of the component (100).
